# EUROPEAN PATENT APPLICATION

(11) **EP 0 693 635 A1**
(43) Date of publication of application: **24.01.1996**
(21) Application number: 95304682.8
(22) Date of filing: 04.07.1995
(51) Int. Cl.: F16D 66/02

(54) **Friction pad**

(30) Priority: 19.07.1994 JP 187927/94
(71) Applicant: NISSHINBO INDUSTRIES, INC., Tokyo 103 (JP)
(72) Inventor: Kato, Noboru, c/o Nagoya Plant, Minami-ku, Nagoya-shi (JP)
(74) Representative: Stuart, Ian Alexander

(57) **Abstract**

A friction pad (1) having an allowable wear limit (6) which is easy to recognize visually has at least one bush (5) fitted in a hole (4) made in a backing (2) for a friction material (3). The bush (5) protrudes from the surface of the backing into the friction material and has a height of protrusion (6) corresponding.to the allowable wear limit of the pad, so that it may contact a rotor and stain it with a warning color upon wear of the friction material to the allowable wear limit.

## Description

This invention relates to friction pads, e.g. as used in a disk brake for an automobile, etc. More particularly, it relates to a friction pad for restraining the rotation of a rotor by pressing against a side of the rotor rotating with a wheel. There may be a pair of pads acting on opposite faces of the rotor.

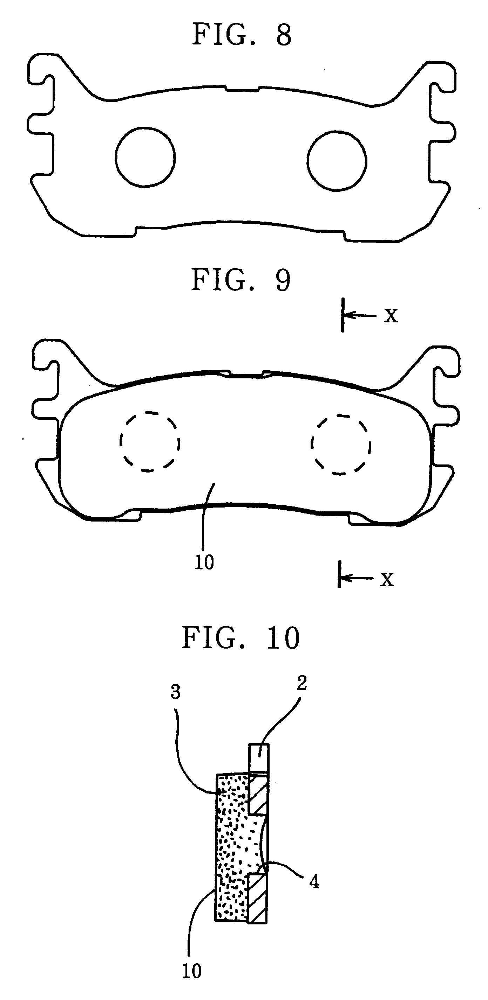

A known friction pad is shown in Figures 8 to 10. When a friction material is molded with a backing to form a unitary assembly, it is protruded into the mold holes of the backing to ensure its shear strength along its friction surface, but as the protruding portions of the friction material are exposed in the back of the assembly, they are coarse in structure. The diameter or number of the holes is, therefore, increased to ensure the satisfactory shear strength of the friction material, but the increased diameter or number of the holes brings about a reduction in strength and rigidity of the backing and calls for an increase of its thickness.

Japanese Utility Model Publication No. 57-57230 shows the necessity of making a new hole or holes for mounting a display member in a backing.

The known pad fails to give an appropriate warning about its wear limit, since it is worn in a different degree from one portion to another as viewed in the direction of rotation of a rotor. As no preliminary warning is given prior to the wear of the pad to its wear limit, the backing contacts the rotor if a warning color staining the rotor is overlooked for a long time.

A preferred embodiment of this invention provides an improved friction pad having a wear limit which is easy to recognize visually.

According to the present invention there is provided
(1) a friction pad comprising a backing having a plurality of mold holes and a friction material attached to the front surface of the backing to form a unitary assembly, suitable for restraining the rotation of a rotor by pressing against either side of the rotor rotating with a wheel, wherein a nonmetallic bush having a hardness which is lower than that of the rotor is so fitted in each of the holes as to protrude from the front surface of the backing to make sliding contact with the rotor and stain it with a warning color upon wear of the friction material to its wear limit,
(2) a friction pad as set forth at (1), wherein the bushes are differently colored from the leading portion of the pad to the trailing portion of the pad in the direction of rotation of the rotor, and
(3) a friction pad as set forth at (1), wherein the bushes have a different height of protrusion from the backing and are differently colored, one of the bushes having a height of protrusion which corresponds to the wear limit, while another has a height which is slightly larger than the height corresponding to the wear limit.

### BRIEF DESCRIPTION OF THE DRAWINGS

Figure 1 is a sectional view taken along the line I-I of Figure 3;
Figure 2 is a top plan view of a backing for a friction pad embodying this invention;
Figure 3 is a top plan view of the pad made by attaching a friction material to the backing of Figure 2;
Figure 4 is a view similar to Figure 1, but showing a bush having a shoulder as a substitute for the bush shown in Figure 1;
Figure 5 is a view similar to Figure 4, but showing a modified form of bush not projecting from the rear surface of the backing;
Figure 6 is a top plan view of another friction pad embodying this invention;
Figure 7 is a sectional view taken along the line VII-VII of Figure 6 and showing bushes having a different height;
Figure 8 is a top plan view of a backing for a known friction pad;
Figure 9 is a top plan view of the known pad made by attaching a friction material to the backing of Figure 8; and
Figure 10 is a sectional view taken along the line X-X of Figure 9.

As each hole of the backing is blocked with the bush (a display or indicating member), the structure of the friction material is denser comparing to a known friction pad around the protruded portion of each hole to ensure its satisfactory shear strength without calling for any increase in diameter or number of the holes, and to enable to thin the thickness of the backing.

The mold holes of the nature made in the backing can be employed for fitting the bushes to the backing of the pad according to this invention. A process employed for making the mold holes in the known pad can be employed for changing diameter, location, or number of the mold holes of the backing in the pad of this invention.

The provision of differently colored bushes from the leading portion of the pad to the trailing portion of the pad in the direction of rotation of the rotor enables an appropriate warning to be given about its wear limit irrespective of any difference in wear from one portion of the pad to another.

The provision of differently colored bushes from one portion of the pad in the vicinity of the center of the rotor to another in the vicinity of its outer circumference enables an appropriate warning to be given about any difference in wear between those portions.

The provision of differently colored bushes having a different height of protrusion from the front surface of the backing enables a preliminary warning to be given prior to the wear of the pad to its wear limit, if one of the bushes has a height of protrusion which is slightly larger than that of another which corresponds to the wear limit.

### Example

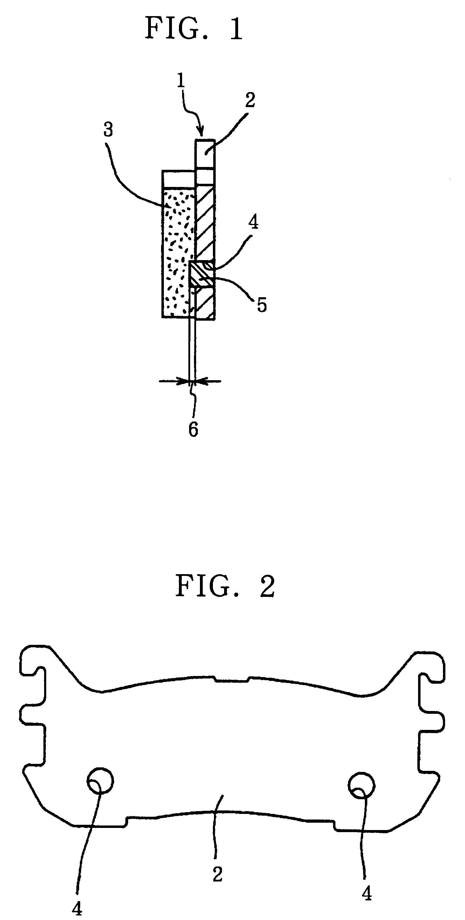

A friction pad embodying this invention is shown in Figures 1 to 3. The friction pad 1 comprises a friction material 3 molded on the front surface of a backing 2 having a pair of mold holes 4. A bush 5 is securely fitted in each hole 4 and protrudes from the front surface of the backing 2 by a height which is equal to the thickness of a layer 6 of the friction material defining its allowable wear limit. Each bush 5 is made of a nonmetallic material having a hardness which is lower than that of a rotor, such as a heat resistant synthetic resin containing e.g. a red or blue pigment. Each bush 5 can be secured in the hole 4 by employing any ordinary method including pressing, screwing, inserting, or fixing by using a C- or E-shaped retaining ring. The bush 5 may alternatively be provided in only one of the holes 4.

This invention is applicable to one or both of a pair of friction pads which are used for restraining the rotation of a rotor.

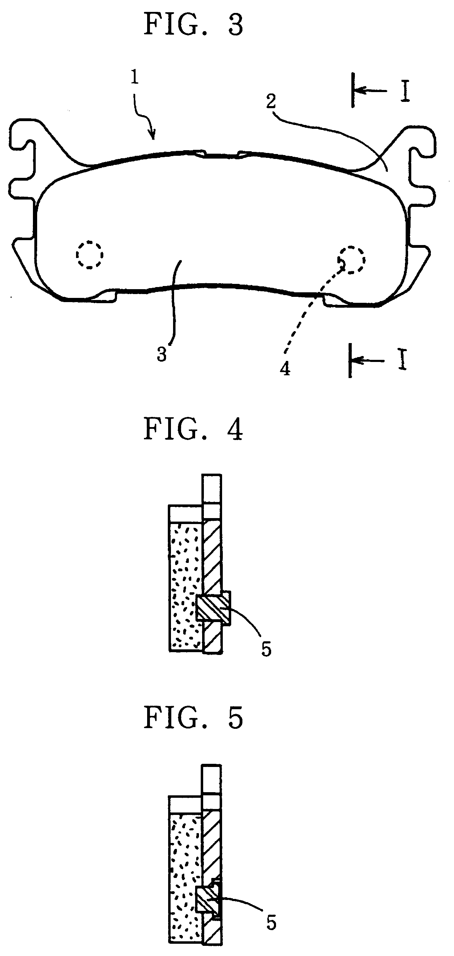

Figure 4 shows a modified form of bush 5 having a shoulder held against the rear surface of a backing 2.

Figure 5 shows another modified form of bush 5 having a shoulder, but recessed in a backing 2 so as not to project from its rear surface.

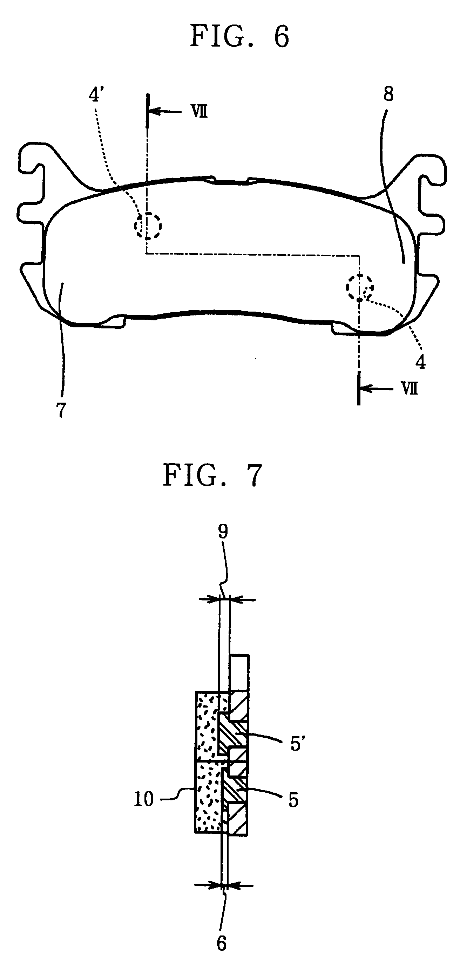

Another friction pad embodying this invention is shown in Figures 6 and 7. Its backing 2 has a pair of holes 4 and 4' spaced apart from each other in the direction of rotation of a rotor and also radially of the rotor. For example, the hole 4' in leading portion 7 of the pad is close to the outer circumference of the rotor, while the other hole 4 in trailing portion 8 is close to the inner circumference thereof. A bush is fitted in each hole and protrudes into a friction material having a friction surface 10. The bushes 5 and 5' are differently colored, and their protrusions held against the front surface of the backing 2 are different in height. The bush 5 fitted in the hole 4 has a height of protrusion 6 which is equal to the thickness of a layer of the friction material defining its allowable wear limit, while the bush 5' in the hole 4' has a height of protrusion 9 which is slightly larger than the thickness of the layer defining the allowable wear limit.

By using the friction pad of the present invention, it is possible to ensure its enough shear strength of the friction material and thin the thickness of the backing.

The mold holes of the nature made in the backing can be employed for fitting the bushes to the backing of the pad.

An appropriate warning can be given about its wear limit.

## Claims

1. A friction pad (1) comprising a backing (2)having a plurality of mold holes (4) and a friction material (3) attached to the front surface of said backing (2) to form a unitary assembly, suitable for restraining the rotation of a rotor by pressing against either side of the rotor, characterised in that a nonmetallic bush (5) is so fitted in at least one of said holes (4) as to protrude from said surface of said backing (2) to make sliding contact with the rotor and stain it with a warning color upon wear of said friction material to its allowable wear limit (6).

2. A friction pad as set forth in claim 1, having a plurality of said bushes (5) fitted in respective ones of said holes (4), said bushes (5) including bushes of different colours disposed so that there is a change in bush colour from the leading portion of the pad (1) to the trailing portion of the pad in the direction of rotation of the rotor.

3. A friction pad as set forth in claim 1 or claim 2, having a plurality of said bushes (5,5') fitted in respective ones of said holes, said bushes including bushes of different height, of protrusion (6,9) from said backing (2), one of said bushes (5) having a height of protrusion (6) corresponding to said wear limit, while another (5') has a height (9) which is slightly larger than said height corresponding to said wear limit.

4. A friction pad as set forth in claim 3 wherein said bushes (5,5') of different heights are of different colours.

5. A friction pad according to any preceding claim having a plurality of said bushes (5,5') of different colours disposed in respective holes (4,4') which are radially distributed so that, in use, they are at different distances from the centre of the rotor.

6. A brake/rotor assembly comprising a friction pad according to any preceding claim, a rotor, and means for urging the friction pad against a face of the rotor to brake it.

7. A brake/rotor assembly according to claim 6 wherein the or each bush is of a material which is of lower hardness than the face of the rotor and adapted to stain it.
